# EUROPÄISCHE PATENTSCHRIFT

(11) **EP 1 205 365 B1**
(45) Veröffentlichungstag und Bekanntmachung des Hinweises auf die Patenterteilung: **16.02.2005**
(21) Anmeldenummer: 01125705.2
(22) Anmeldetag: 27.10.2001
(51) Int. Cl.: B60R 21/34

(54) **Kraftfahrzeug mit einer Fronthaube**
Motor vehicle with hood
Véhicule automobile avec capot

(30) Priorität: 14.11.2000 DE 10056250
(43) Veröffentlichungstag der Anmeldung: 15.05.2002
(73) Patentinhaber: Bayerische Motoren Werke Aktiengesellschaft, 80809 München (DE)
(72) Erfinder: Haeufele, Klaus, Dr., 80801 Muenchen (DE)

(56) Entgegenhaltungen:
- DE-A- 19 712 961
- PATENT ABSTRACTS OF JAPAN vol. 1998, no. 04, 31. März 1998 (1998-03-31) -& JP 09 315266 A (MITSUBISHI MOTORS CORP), 9. Dezember 1997 (1997-12-09)
- PATENT ABSTRACTS OF JAPAN vol. 1999, no. 04, 30. April 1999 (1999-04-30) -& JP 11 020741 A (NISSAN MOTOR CO LTD), 26. Januar 1999 (1999-01-26)

## Beschreibung

Die Erfindung bezieht sich auf ein Kraftfahrzeug mit einer Fronthaube der im Oberbegriff des Patentanspruchs 1 genannten und beispielsweise aus der DE 28 14 107 A1 hervorgehenden Art.

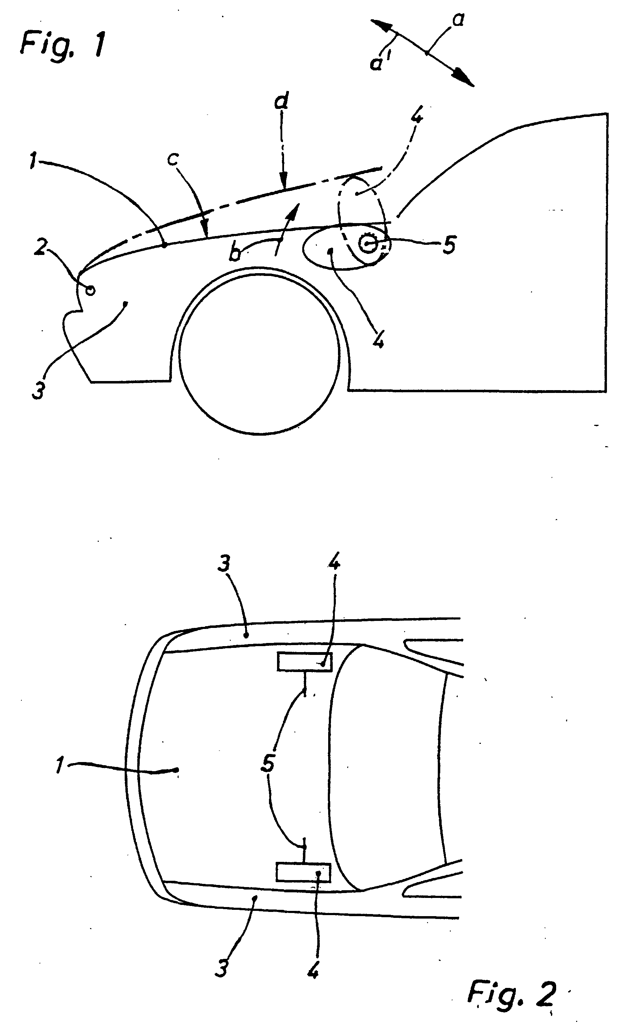

Wie in den Fig. 1 und 2 dieser Druckschrift ersichtlich, liegt die Fronthaube des dargestellten Personenkraftwagens in ihrer Ruhelage an ihrem rückwärtigen Rand auf einem Airbag auf, der bei einer Fußgängerkollision sensorgesteuert aufgeblasen wird. In Fig. 1 ist ersichtlich, dass hierbei die Fronthaube um eine an ihremvorderen, oben liegenden Eckbereich oder - wie Fig. 2 zeigt - um eine nahe des Stoßfängers liegende Schwenkachse hochgeschwenkt und dabei zum Fußgänger hin verlagert wird. Neben der Verlagerung der Fronthaube durch den Airbag ist es auch bekannt, diese durch Spiralfedern oder durch Hubzylinder zu verlagern. Diese Hubelemente sind jedoch verhältnismäßig bauaufwendig gestaltet und haben auch ein hohes Gewicht. Ferner kann die Fronthaube durch die bekannten Hubelemente nicht sehr rasch verlagert werden.

Aufgabe der Erfindung ist es daher, bei einem Kraftfahrzeug mit einer Einrichtung der im Oberbegriff des Patentanspruchs 1 genannten Art ein solches Hubelement vorzusehen, durch das die Fronthaube sehr rasch verlagerbar ist.

Zur Lösung der Aufgabe sind die im Patentanspruch 1 dargelegten Merkmale vorgesehen.

Da in die erfindungsgemäß vorgesehene Kurvenscheibe bei einer Fußgängerkollision sensorgesteuert lediglich eine Winkeldrehung eingeleitet wird, wird hierbei die Fronthaube sehr rasch von der Ruhelage in die Aufprall-Lage verlagert. Dabei wird die Winkeldrehung zweckmäßigerweise durch eine manuell - beispielsweise mittels einer Handkurbel - oder elektromotorisch vorgespannte Spiralfeder erzeugt, wobei die Kurvenscheibendrehung analog zur Drehbewegung der Spiralfeder erfolgt. Dieser Antrieb ist sehr kostengünstig vorzusehen und hat ein geringes Gewicht (Merkmale der Patentansprüche 1, 3, 4 und 6).

Damit eine relativ breite und verhältnismäßig schwere Fronthaube eines Personenkraftwagens bei einer Fußgängerkollision optimal in die Aufprall-Lage verlagert wird, ist an den beiden gegenüberliegenden Seitenbereichen des Vorderbaus eines Personenkraftwagens jeweils wenigstens eine Kurvenscheibe drehbar gelagert, die mit den Seitenrändern der Fronthaube zusammenwirken. Bei zur Erzeugung der Winkeldrehungen vorgesehenen Spiralfedern, die elektromotorisch vorgespannt werden, kann hierbei vorteilhafterweise der Scheibenwischermotor benutzt werden. Dabei wird die Fronthaube um wenigstens einen, in einer Fahrzeugquerebene verlaufenden Schwenkbolzen verschwenkt, der sich am vorderen, untenliegenden Rand der Fronthaube befindet (Merkmale der Patentansprüche 2, 5 und 7).

Neben der bloßen Beaufschlagung der Unterseite der Fronthaube durch den Außenmantel der Kurvenscheiben besteht gemäß den Merkmalen des Patentanspruchs 8 auch eine Möglichkeit darin, an mindestens einer Stirnseite einer Kurvenscheibe eine Steuernut auszubilden, in die ein an der Unterseite der Fronthaube vorgesehener Führungszapfen eingreift. Dabei verläuft die Steuernut etwa parallel zum Außenmantel der Kurvenscheibe, so dass die Fronthaube bei Winkeldrehungen der Kurvenscheibe zwangsgeführt zwischen der Ruhelage und der Aufprall-Lage verlagert wird. Bei dieser zwangsgeführten Verlagerung der Fronthaube werden in diese vorteilhafterweise auch kaum Schwingungen eingeleitet, denn diese können den beim Aufprall des Kopfes eines Fußgängers auf die Fronthaube entstehenden Gesundheitsschaden noch erhöhen, wenn die Schwingungsrichtung entgegen der Aufprallrichtung des Kopfes wirkt.

Ein Ausführungsbeispiel der Erfindung ist in der Zeichnung dargestellt und wird im Folgenden erläutert. Es zeigt:
- Fig. 1: den vorderen Endbereich eines Personenkraftwagens in Seitenansicht in Ruhelage und in Aufprall-Lage,
- Fig. 2: eine Draufsicht zur Fig. 1,
- Fig. 3 und Fig. 4: eine abgewandelte Ausführungsart von Fig. 1.

Der in den Fig. 1 und 2 dargestellte vordere Bereich eines Personenkraftwagens hat eine Fronthaube 1, die um einen in einer Fahrzeugquerebene verlaufenden sowie frontseitig vorgesehenen Schwenkbolzen 2 in den Richtungen des Doppelpfeils a schwenkbar gelagert ist. Ferner ist an den beiden gegenüberliegenden Seitenbereichen des Vorderbaus 3 sowie im Bereich des untenliegenden Randes der Windschutzscheibe jeweils eine Kurvenscheibe 4 um einen Lagerbolzen 5 drehbar gelagert.

Falls der vordere Randbereich der Fronthaube 1 bei einer Fußgängerkollision vom Fußgänger beaufschlagt wird, so wird die nicht dargestellte Verriegelung der Fronthaube 1 entriegelt und die beiden Kurvenscheiben 4 durch die Wirkung der vorgespannten, sich nunmehr entspannenden Spiralfedern von der mit durchgezogenen Linien dargestellten, niedergeschwenkten Lage in Pfeilrichtung b in die mit strichpunktierten Linien dargestellte, hochgeschwenkte Lage verlagert, wodurch die Fronthaube 1 in Pfeilrichtung a' von der mit durchgezogenen Linien dargestellten Ruhelage c in die mit strichpunktierten Linien dargestellte Aufprall-Lage d verlagert wird. Dabei liegen die Seitenränder der Fronthaube 1 stets auf den Kurvenscheiben 4 auf, so dass kaum Schwingungen in die Fronthaube 1 eingeleitet werden.

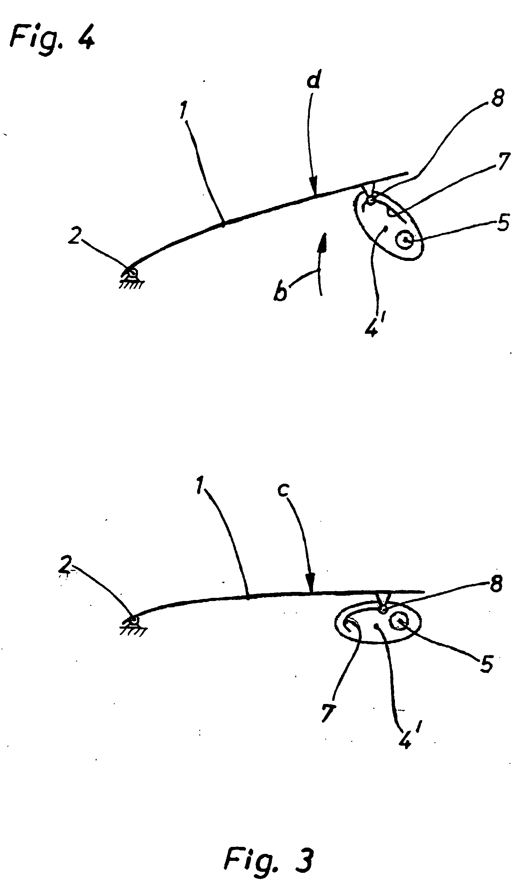

Bei dem in den Fig. 3 und 4 dargestellten Ausführungsbeispiel der Fronthaube 1 ist an einer Stirnseite der beiden Kurvenscheiben 4' jeweils eine Steuernut 7 ausgebildet, in die jeweils ein an der Unterseite der Fronthaube 1 vorgesehener Führungszapfen 8 eingreift. Dabei verläuft die Steuernut 7 jeweils etwa parallel zum Außenmantel der Kurvenscheibe 4', so dass die Fronthaube 1 bei einer Winkeldrehung der Kurvenscheiben 4' in Pfeilrichtung b in Folge einer Fußgängerkollision zwangsgeführt zwischen der Ruhelage c und der Aufprall-Lage d verlagert wird. Bei Verschwenkung der Kurvenscheiben 4' gegen Pfeilrichtung b wird die Fronthaube 1 von der Aufprall-Lage d in die Ruhelage c zurückverlagert. Bei dieser zwangsgeführten Verlagerung der Fronthaube 1 zwischen der Ruhelage c und der Aufprall-Lage d wird die Fronthaube 1 kontrolliert verlagert und dabei auch in diese fast keine Schwingungen eingeleitet.

## Patentansprüche

1. Kraftfahrzeug mit einer Fronthaube, die bei einer Fußgängerkollision sensorgesteuert aus einer Ruhelage in eine angehobene Aufprall-Lage verlagert wird,
**gekennzeichnet durch** mindestens eine drehbar gelagerte Kurvenscheibe (4, 4'), die bei einer Fußgängerkollision winkeldrehbar ist und **dadurch** die Fronthaube (1) in die Aufprall-Lage (d) verlagert.

2. Kraftfahrzeug nach Anspruch 1,
**dadurch gekennzeichnet, dass** an den gegenüberliegenden Seitenrändern des Vorderbaus (3) eines Personenkraftwagens jeweils wenigstens eine Kurvenscheibe (4) drehbar gelagert ist, die mit den Seitenrändern der Fronthaube (1) zusammenwirkt.

3. Kraftfahrzeug nach Anspruch 1 oder 2,
**dadurch gekennzeichnet, dass** die Kurvenscheibe (4) durch die Wirkung mindestens einer vorgespannten Spiralfeder winkeldrehbar ist.

4. Kraftfahrzeug nach Anspruch 3,
**dadurch gekennzeichnet, dass** die Spiralfeder elektromotorisch vorspann bar ist.

5. Kraftfahrzeug nach Anspruch 4,
**dadurch gekennzeichnet, dass** die Spiralfeder durch den Scheibenwischermotor vorspannbar ist.

6. Kraftfahrzeug nach Anspruch 3,
**dadurch gekennzeichnet, dass** die Spiralfeder manuell vorspannbar ist.

7. Kraftfahrzeug nach Anspruch 1,
**dadurch gekennzeichnet, dass** die Fronthaube (1) um wenigstens einen in einer Fahrzeugquerebene verlaufenden Schwenkbolzen (2) schwenkbar ist.

8. Kraftfahrzeug nach einem der Ansprüche 1 bis 7,
**dadurch gekennzeichnet, dass** an mindestens einer Stirnseite von wenigstens einer Kurvenscheibe (4') eine Steuernut (7) ausgebildet ist, in die ein an der Unterseite der Fronthaube (1) vorgesehener Führungszapfen (8) eingreift, wobei die Steuernut derart verläuft, dass die Fronthaube bei Winkeldrehungen der Kurvenscheibe zwangsgeführt zwischen der Ruhelage (c) und der Aufprall-Lage (d) verlagert wird.

## Claims

1. A motor vehicle with a bonnet which is displaced, controlled by a sensor, from a rest position into a raised impact position in the event of a pedestrian collision, **characterised by** at least one rotatably mounted cam disc (4, 4') which can be rotated at an angle in the event of a pedestrian collision and thus displaces the bonnet (1) into the impact position (d).

2. A motor vehicle according to claim 1, **characterised in that** at least one respective cam disc (4) is rotatably mounted at the opposing side edges of the front end (3) of a passenger car and cooperates with the side edges of the bonnet (1).

3. A motor vehicle according to claim 1 or 2, **characterised in that** the cam disc (4) can be rotated by the action of at least one biased spiral spring.

4. A motor vehicle according to claim 3, **characterised in that** the spiral spring can be biased by an electric motor.

5. A motor vehicle according to claim 4, **characterised in that** the spiral spring can be biased by the windscreen wiper motor.

6. A motor vehicle according to claim 3, **characterised in that** the spiral spring can be biased manually.

7. A motor vehicle according to claim 1, **characterised in that** the bonnet (1) can be pivoted about at least one pivot pin (2) extending in a transverse plane of the vehicle.

8. A motor vehicle according to any one of claims 1 to 7, **characterised in that** a control groove (7) is formed on at least one end face of at least one cam disc (4'), a guide pin (8) provided on the lower side of the bonnet (1) engaging in the control groove, wherein the control groove extends in such a way that the bonnet is positively displaced between the rest position (c) and the impact position (d) on angular rotations of the cam disc.

## Revendications

1. Véhicule automobile avec un capot qui, sous la commande de détecteurs, passe d'une position de repos à une position d'impact relevée, dans le cas d'une collision avec un piéton,
**caractérisé en ce qu'**
il comporte au moins un disque de came (4, 4'), monté en rotation et qui effectue une rotation angulaire dans le cas d'une collision avec un piéton, en faisant ainsi passer le capot (1) à la position de collision (d).

2. Véhicule selon la revendication 1,
**caractérisé en ce que**
le long de chacun des bords latéraux opposés de la structure avant (3) d'un véhicule de tourisme, est monté en rotation au moins un disque de came (4) qui coopère avec les bords latéraux du capot (1).

3. Véhicule selon la revendication 1 ou 2,
**caractérisé en ce que**
le disque de came (4) tourne par l'action d'au moins un ressort spirale précontraint.

4. Véhicule selon la revendication 3,
**caractérisé en ce que**
la précontrainte du ressort spirale est produite par un moteur électrique.

5. Véhicule selon la revendication 4,
**caractérisé en ce que**
la précontrainte du ressort spirale est produite par le moteur de l'essuie-glace.

6. Véhicule selon la revendication 4,
**caractérisé en ce que**
la précontrainte du ressort spirale est produite manuellement.

7. Véhicule selon la revendication 1,
**caractérisé en ce que**
le capot (1) peut basculer autour d'au moins un pivot de basculement (2) situé dans un plan transversal au véhicule.

8. Véhicule selon une des revendications 1 à 7,
**caractérisé en ce que**
sur au moins une face frontale d'au moins un disque de came (4') est creusée une gorge de commande (7) dans laquelle est engagé un pivot de guidage (8) prévu sur la face inférieure du capot (1), le tracé de cette gorge de commande étant tel que le capot, quand le disque de came effectue une rotation angulaire, est déplacé impérativement entre la position de repos (c) et la position de collision (d).
